# EUROPEAN PATENT SPECIFICATION

(11) **EP 4 076 265 B1**
(45) Date of publication and mention of the grant of the patent: **20.12.2023**
(21) Application number: 20839506.1
(22) Date of filing: 17.12.2020
(51) Int. Cl.: A61C 5/40, A61C 1/08

(54) **CUSTOM ENDODONTIC DRILL GUIDE AND METHOD, SYSTEM, AND COMPUTER READABLE STORAGE MEDIA FOR PRODUCING A CUSTOM ENDODONTIC DRILL GUIDE**
MASSGESCHNEIDERTE ENDODONTISCHE BOHRERFÜHRUNG UND VERFAHREN, SYSTEM UND COMPUTERLESBARES SPEICHERMEDIUM ZUM PRODUZIEREN EINER MASSGESCHNEIDERTEN ENDODONTISCHEN BOHRERFÜHRUNG
GUIDE DE FORET D'ENDODONTIE PERSONNALISÉ ET PROCÉDÉ, SYSTÈME ET SUPPORT DE STOCKAGE LISIBLE PAR ORDINATEUR POUR PRODUIRE UN GUIDE DE FORET D'ENDODONTIE PERSONNALISÉ

(30) Priority: 17.12.2019 US 201962948916 P
(43) Date of publication of application: 26.10.2022
(73) Proprietor: DENTSPLY SIRONA Inc., York, PA 17401 (US)
(72) Inventor: SHOTTON, Vincent, Broken Arrow, Oklahoma 74014 (US); WILKINSON, Kevin, Bixby, Oklahoma 74008 (US)
(74) Representative: Özer, Alpdeniz
(86) International application number: PCT/US2020/065466
(87) International publication number: WO 2021/127083

(56) References cited:
- EP-A1- 3 013 273
- WO-A1-2014/137885
- WO-A1-2017/100828
- WO-A2-2011/101447
- US-A1- 2010 304 326
- US-B1- 6 390 814

## Description

### FIELD OF THE INVENTION

The present invention relates generally to endodontic drill guides and more specifically it relates to a method, a system and computer readable storage media for creating a drill guide for the purpose of providing reduced access openings while providing direction in establishing canal patency within an endodontically treated tooth. The invention also relates to the drill guide and the design of accessories used with the drill guide.

### BACKGROUD OF THE INVENTION

In an Endodontic Root Canal Procedure, once a clinician has determined a tooth requires root canal therapy, the clinician may begin a process of using high speed burs usually driven by air rotating at approximately >2000 RPM to perform an access opening on the tooth. The purpose of creating an access opening in the tooth may be to provide a sufficient opening and pathway (typically straight line access) for the clinician to shape, clean, and obturate (fill/seal) the root canal in order to remove and prevent bacteria from remaining in the root canals of the tooth.

Studies have shown that by creating a smaller access opening of the tooth, the strength of the tooth may be enhanced. The publication by Allen et Al. (Stress distribution in a tooth treated through minimally invasive access compared to one treated through traditional access: A finite element analysis study, J Conserv Dent. 2018 Sep-Oct; 21(5): 505-509.) compared a minimally invasive access with composite filling, a minimally invasive access with composite filling and crown, and traditional access with composite filling and crown. Herein a minimally invasive access with composite filling significantly reduced the stress (6.98 MPa) as compared to a minimally invasive access with composite filling and crown (11.79 MPa) and traditional access with composite filling and crown (16.81 MPa) when applying a 100N occlusal load.

The publication by Zhang et. Al (The Effect of Endodontic Access Cavities on Fracture Resistance of First Maxillary Molar Using the Extended Finite Element Method, J Endod. 2019 Mar;45(3):316-321.) shows that the fracture resistance of an endodontically treated tooth may be increased by preparing the conservative endodontic cavity. In the cervical region, larger stress concentration areas were found in the modified endodontic cavity and the traditional endodontic cavity compared with the natural tooth and the conservative endodontic cavity.

According to the American Academy of Endodontics (Endodontics: Colleagues for Excellence: Access Opening and Canal Location: Spring 2010), the number of root canal orifices in a particular tooth may not be known prior to the commencement of treatment. "Although radiographs are helpful and can sometimes indicate the number of roots, the averages have been enumerated the number or position of the root canal orifices cannot be identified." (Page 4) The number of orifices and location of orifices may be based on training of the clinician including the Law of Symmetry 1, Law of Symmetry 2, Law of Color Change, Law of Orifice Location 1, and Law of Orifice Location 2 (Pages 4-5).

Some prior art have shown a process of digitally scanning the anatomy of a tooth/teeth, converting the digital scan to a file format that can be used to create a drill guide, creating the drill guide, using the drill guide to properly orientate the drill relative to the anatomy of the patient. Most of these prior art have been used for creating drill guides for the placement of Dental Implants as well as Restorations.

US Patent 9138299 specifically discusses using digital scans for the purpose of endodontics in being able to take a scanned image of a tooth to help the clinician identify how many canals there are and where they are located as well as having the software create of the access cavity. Furthermore, it discusses being able to create a custom made jig based on the desired access cavity to be created. The limitation of this invention is that it does not discuss nor provide how the jig is designed/created, how it is affixed to the patient, and how it can be used in conjunction with high speed burs for creating access or in conjunction with handfiles for creating canal patency. Furthermore, it specifies enforcing straight line access to the canals of the tooth but does not disclose how this is performed in relationship to the anatomy of the tooth when the clinician is performing the procedure.

U.S. Patent Application 2013/0171580 discusses the process for designing a drill guide for creating access of a tooth. This application is deficient in how the fixture design is produced to allow high speed burs in creating access openings. Furthermore, the application does not disclose how the handfiles may be placed in the tooth in order to create patency of the root canals.

EP3013273 discloses a method for creating a virtual drill guide for manufacturing a physical drill guide.

### BRIEF SUMMARY OF THE INVENTION

The above-mentioned problems of the prior art are overcome by the method as defined in claim 1, the system as defined in claim 19, and the computer readable media as defined in claim 18. The dependent claims relate to further developments. The invention discloses a method, system, and computer readable media for ensuring that not only does a dental practitioner know how many canals are in the tooth but also their location relative to the anatomy such that a drill guide may be created to match the anatomy for proper orientation of the high speed burs and files for cleaning/shaping. The benefit of this process may be that by knowing where the canals are located within the tooth, a relatively small access opening may be achieved which provides for a strong crown during the restoration process; and by knowing where the canals are located within the tooth, a duration of endodontic procedures and probability of missing canals may be reduced.

Furthermore, the disclosure discloses how a drill guide may be created for providing a minimal access opening for the tooth as well as how the drill guide may be used by the dental practitioner/clinician when handfiling in order to establish canal patency.

In an aspect herein the present invention may provide a method for creating a virtual drill guide for manufacturing a physical drill guide, said method comprising: obtaining a digital 3D representation of one or more physical teeth; obtaining a location of one or more canals in the digital 3D representation; placing a virtual dental dam clamp in the digital 3D representation based on a desired location and orientation of a corresponding physical dental dam clamp; placing one or more virtual burs in the digital 3D representation based on the obtained location of the one or more canals; creating a virtual drill guide based on (i) properties of the one or more placed virtual burs, (ii) properties of the virtual dental dam clamp and (iii) anatomies of one or more virtual teeth; wherein the virtual drill guide is designed such that the physical drill guide to be manufactured based on the virtual drill guide includes one or more physical holes based on the location of the placed virtual burs, and such that the one or more physical holes are configured to receive physical burs at a predetermined angle and position in order (i) allow the creation of an access opening to one or more physical canals in one or more physical teeth and (ii) to provide direction in the establishment of canal patency in the one or more physical teeth. The method further comprises manufacturing the physical drill guide based on the virtual drill guide.

In another aspect herein, the method may further comprise one or more combinations of the following steps (ii) placing metal inserts in the one or more physical holes and creating an access opening on the one or more physical teeth using a bur placed inside the metal insert of the physical drill guide, (iii) placing a handfile sleeve into the metal insert until it makes contact with a crown of the one or more physical teeth and establishing canal patency in the one or more physical teeth using a handfile, (iv) wherein the properties of the one or more placed virtual burs and the properties of the dental dam clamp are selected from one or more properties including shape, size, orientation, and position, (v) wherein one or more virtual teeth are segmented from the digital 3D representation to allow for isolated designing of the virtual drill guide, (vi) wherein the one or more virtual burs are placed by rotating and translating them such that a cutting end of the one or more virtual burs are is placed at a canal orifice, (vii) wherein the virtual drill guide is designed to be seated on a single tooth or a plurality of adjacent teeth, (viii) wherein the virtual drill guide is automatically designed, (ix) wherein the virtual drill guide is designed using at least input from a user, (x) wherein the virtual drill guide is designed to include a channel for receiving a light source, (xi) wherein the virtual drill guide is designed to include a connector for connection to a suction system, (xii) wherein virtual drill guide is designed to accommodate a plurality of virtual dental dam clamps.

Further described is a method for creating a physical drill guide for endodontic use, said method comprising: obtaining a digital 3D representation of one or more physical teeth; obtaining a location of one or more canals in the digital 3D representation; placing a virtual dental dam clamp in the digital 3D representation based on a desired location and orientation of a corresponding physical dental dam clamp; placing one or more virtual burs in the digital 3D representation based on the obtained location of the one or more canals; creating a virtual drill guide based on (i) properties of the one or more placed virtual burs, (ii) properties of the virtual dental dam clamp and (iii) anatomies of one or more virtual teeth; fabricating the physical drill guide using the virtual drill guide.

Further described is a physical drill guide comprising: one or more holes each beginning at a first surface and running through a body of the physical drill guide to a second surface opposite the first surface; and wherein the drill guide is dimensioned to accommodate one or more physical burs, one or more dental dam clamps and to fit on one or more teeth; wherein the dimensions of the one or more holes are configured to receive the physical burs at a predetermined angle and position in order (i) allow the creation of an access opening to one or more physical canals in one or more physical teeth and (ii) to provide direction in the establishment of canal patency in the one or more physical teeth.

In a further aspect herein, the present invention may provide a non-transitory computer-readable storage medium storing a program which, when executed by a computer system, causes the computer system to perform a procedure comprising: comprising: obtaining a digital 3D representation of one or more physical teeth; obtaining a location of one or more canals in the digital 3D representation; placing one or more virtual burs in the digital 3D representation based on the obtained location of the one or more canals; creating a virtual drill guide based on (i) properties of the one or more placed virtual burs, (ii) properties of a virtual dental dam clamp and (iii) anatomies of one or more virtual teeth; and designing the virtual drill guide such that the physical drill guide to be manufactured based on the virtual drill guide includes one or more physical holes based on the location of the placed virtual burs, and such that the one or more physical holes are configured to receive physical burs at a predetermined angle and position in order (i) allow the creation of an access opening to one or more physical canals in one or more physical teeth and (ii) to provide direction in the establishment of canal patency in the one or more physical teeth.

In yet another aspect herein, the present invention may provide a system for creating a virtual drill guide for manufacturing a physical drill guide, said system comprising a processor configured to: obtain a digital 3D representation of one or more physical teeth; obtain a location of one or more canals in the digital 3D representation; place a virtual dental dam clamp in the digital 3D representation based on a desired location and/or orientation of a corresponding physical dental dam clamp; place one or more virtual burs in the digital 3D representation based on the obtained location of the one or more canals; create a virtual drill guide based on (i) properties of the one or more placed virtual burs, (ii) properties of the virtual dental dam clamp and (iii) anatomies of one or more virtual teeth; wherein the virtual drill guide is designed such that the physical drill guide to be manufactured based on the virtual drill guide includes one or more physical holes based on the location of the placed virtual burs, and such that the one or more physical holes are configured to receive physical burs at a predetermined angle and position in order (i) allow the creation of an access opening to one or more physical canals in one or more physical teeth and (ii) to provide direction in the establishment of canal patency in the one or more physical teeth.

In another aspect herein, the system may further comprise one or more combinations of the following: (i) wherein the processor is further configured to manufacture the physical drill guide based on the virtual drill guide, (ii) wherein the one or more virtual burs are placed by rotating and translating them such that a cutting end of the one or more virtual burs are is placed at a canal orifice, (iii) wherein the virtual drill guide is automatically designed.

### BRIEF DESCRIPTION OF THE DRAWINGS

Example embodiments will become more fully understood from the detailed description given herein below and the accompanying drawings, wherein like elements are represented by like reference characters, which are given by way of illustration only and thus are not limitative of the example embodiments herein and wherein:
**FIG. 1A** is a high level block diagram of a system according to an embodiment of the present invention.
**FIG. 1B** is a flowchart showing an exemplary method according to an embodiment of the present invention
**FIG. 2** is a diagram of a 3D scan (e.g. CBCT) of a tooth to be treated.
**FIG. 3A** is a perspective view of a model/digital 3D representation of a CBCT scan according to an embodiment of the present invention.
**FIG. 3B** is a perspective view of a model/digital 3D representation of a CBCT scan according to another embodiment of the present invention.
**FIG. 4A** is a perspective view of a 3D model illustrating the identification of a tooth to be treated.
**FIG. 4B** is another perspective view of the 3D model illustrating the identification of a tooth to be treated.
**FIG. 4C** is a perspective view of an identified tooth to be treated according to an embodiment of the present invention.
**FIG. 4D** is a perspective view of an identified tooth to be treated according to another embodiment of the present invention.
**FIG. 4E** is a perspective view of an identified tooth to be treated according to another embodiment of the present invention.
**FIG.** 5 shows a perspective view of a physical tooth.
**FIG.** 6 shows a µCT Scan of a tooth.
**FIG. 7A** shows a perspective view of a 3D model showing a dental dam clamp placed on tooth of in 3D model.
**FIG. 7B** shows a perspective view of a 3D model showing a dental dam clamp placed on tooth.
**FIG. 7C** shows a perspective view of a physical tooth showing a dental dam clamp placed on tooth.
**FIG. 7D** shows another perspective view of FIG 7C.
**FIG. 8A** is a perspective view of a 3D model illustrating bur orientation according to an exemplary embodiment of the present invention.
**FIG. 8B** is a perspective view of a 3D model illustrating bur orientation according to another exemplary embodiment of the present invention.
**FIG. 8C** is a perspective view of a 3D model illustrating bur orientation according to another exemplary embodiment of the present invention.
**FIG. 8D** is a perspective view of a 3D model illustrating bur orientation according to another exemplary embodiment of the present invention.
**FIG. 9A** is a perspective view showing a virtual 3D guide according to an exemplary embodiment of the present invention.
**FIG. 9B** is a perspective view showing a virtual 3D guide according to an exemplary embodiment of the present invention.
**FIG. 9C** is another perspective view showing a virtual 3D guide according to an exemplary embodiment of the present invention.
**FIG. 9D** is a perspective view showing another virtual 3D guide according to another exemplary embodiment of the present invention.
**FIG. 9E** is a perspective view showing a virtual 3D guide according to an exemplary embodiment of the present invention.
**FIG. 9F** is another perspective view showing another virtual 3D guide according to an exemplary embodiment of the present invention.
**FIG. 9G** is another perspective view showing another virtual 3D guide according to an exemplary embodiment of the present invention.
**FIG. 9H** is another perspective view showing another virtual 3D guide according to another exemplary embodiment of the present invention.
**FIG. 10A** is a perspective view illustrating a custom drill guide according to an embodiment of the present invention.
**FIG. 10B** is a perspective view illustrating a custom drill guide according to an embodiment of the present invention.
**FIG. 10C** is a perspective view illustrating a custom drill guide according to an embodiment of the present invention.
**FIG. 10D** is a perspective view illustrating a custom drill guide according to an embodiment of the present invention.
**FIG. 11A** is a perspective view illustrating reusable metal inserts.
**FIG. 11B** is another perspective view illustrating reusable metal inserts.
**FIG. 11C** is another front view illustrating reusable metal inserts.
**FIG. 11D** is another front view illustrating reusable metal inserts.
**FIG. 11E** is a percpective view illustrating reusable metal inserts.
**FIG. 12A** is a front view illustrating high speed burs.
**FIG. 12B** is another front view illustrating high speed burs.
**FIG. 13A** is a sketch showing the creation of access openings in teeth.
**FIG. 13B** is another sketch showing the creation of access openings in teeth.
**FIG. 13C** is another sketch showing the creation of access openings in teeth.
**FIG. 14** is a front view showing a CT scan of a tooth after creating an access opening.
**FIG. 15** is a top view of a tooth with an access opening.
**FIG. 16A** is a side view illustrating a handfile and a guide for the handfile.
**FIG. 16B** is another side view illustrating a handfile and a guide for the handfile.
**FIG. 17A** is a sketch illustrating a process of using a handfile with a drill guide.
**FIG. 17B** is another sketch illustrating a process of using a handfile with a drill guide.
**FIG. 17C** is another sketch illustrating a process of using a handfile with a drill guide.
**FIG. 18** is a diagram showing a CT scan of a tooth after creating patency.
**FIG. 19** is a diagram showing a CT scan of a tooth after shaping.
**FIG. 20** is a diagram showing a CT scan of a tooth after obturation.
**FIG. 21** is a perspective view showing an obturated tooth obturated in place.
**FIG. 22A** is a perspective view of an alternative embodiment of the present invention.
**FIG. 22B** is another perspective view of an alternative embodiment of the present invention.
**FIG. 22C** is another perspective view of an alternative embodiment of the present invention.
**FIG. 23A** is a perspective view of an alternative embodiment of the present invention.
**FIG. 23B** is another perspective view of an alternative embodiment of the present invention.
**FIG. 23C** is another perspective view of an alternative embodiment of the present invention.
**FIG. 23D** is another perspective view of an alternative embodiment of the present invention.
**FIG. 24A** is a perspective view of yet another alternative embodiment of the present invention.
**FIG. 24B** is a perspective view of yet another alternative embodiment of the present invention.
**FIG. 24C** is a perspective view of yet another alternative embodiment of the present invention.
**FIG. 24D** is a perspective view of yet another alternative embodiment of the present invention.
**FIG. 25** is a block diagram of a computer system according to an exemplary embodiment of the present invention.

Different ones of the figures may have at least some reference numerals that may be the same in order to identify the same components, although a detailed description of each such component may not be provided below with respect to each Figure.

### DETAILED DESCRIPTION OF THE INVENTION

In accordance with example aspects described herein, a method, a system and computer readable storage media for creating a physical drill guide for the purpose of providing reduced access openings while providing direction in establishing canal patency within an endodontically treated tooth. The invention also relates to the physical drill guide.

### System and Method for Producing a Custom Drill Guide

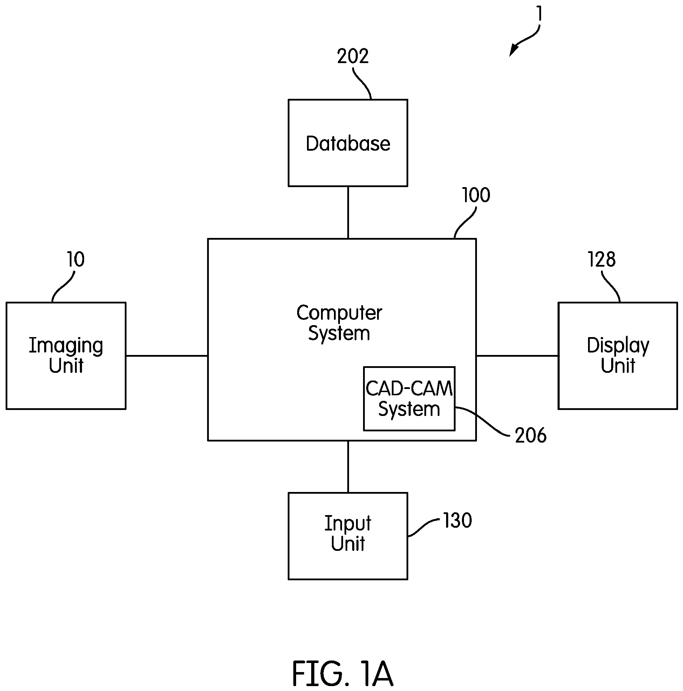

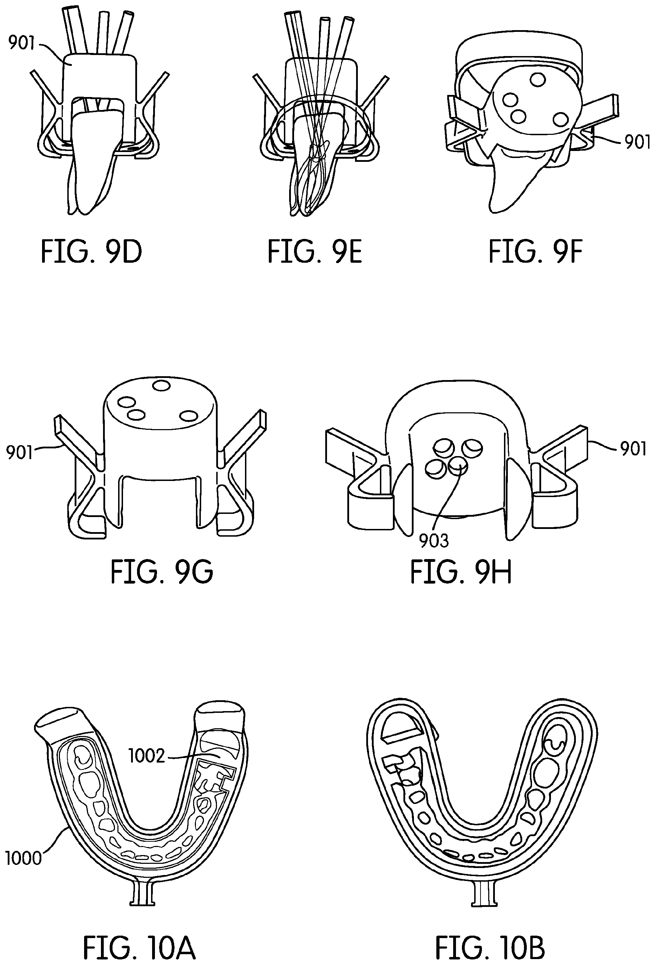

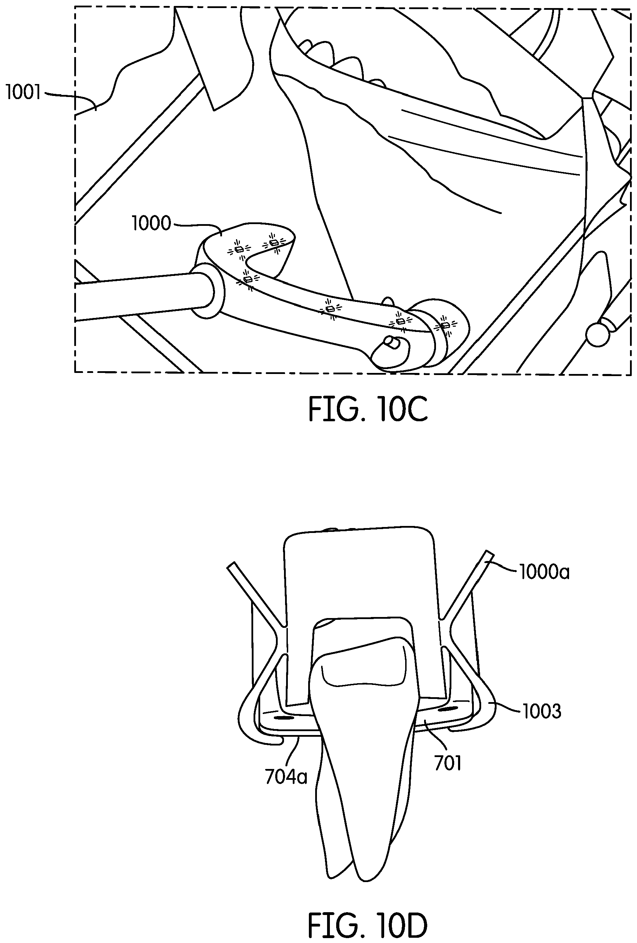

The invention proposes a system 1 as shown in **FIG. 1A** for producing a custom drill guide **1000** (**FIG. 10A**). The custom drill guide may be a physical drill guide that is manufactured, using for example, subtractive manufacturing such as milling, grinding etc. as well as additive manufacturing such as 3D printing or any other method of converting a virtual design into a physical form. More specifically, it may be manufactured using CAD/CAM system **206** of the computer system **100.** In an embodiment, aid CAD/CAM System 206 may also include a software for some or all of the designing processes discussed hereinafter. In another embodiment, the software may be separate from the CAD/CAM System 206. The system **1** may include an imaging unit **10** which may be connected to or separate from a computer system **100.** The imaging unit **10** of the system **1** may be any device used for creating a digital scan **200** of a tooth such as a Cone Beam Computed Tomography (CBCT) device, a Micro-Computed Tomography (µCT) device, a Magnetic Resonance Imaging (MRI) device and/or the like. The system **1** may also include a database **202** containing a library of burs **1200,** a library of dental dam clamps, a library of handfiles, and/or otherwise database of accessories for creating an access and/or pathway within a tooth, a display unit **128** and/or an input unit **130.** The database **202,** input unit **130** and display unit **128** may be a part of the computer system **100** or may be separate from the computer system **100.** In an embodiment, the system **1** may allow the creation/design of burs, dental dam clamps and handfiles.

The computer system **100,** in conjunction with the input unit **130,** database **202** and display unit **128** may be used to design and create a custom/physical drill guide **1000** for the purpose of providing access openings **1500** while providing direction in establishing canal patency within an endodontically treated tooth. Furthermore, the computer system **100** may be used to place and orientate accessories to be used with the custom drill guide **1000** in order to ensure effectiveness when using burs **1200** (such as high speed burs) in creating access openings **1500** and handfiles **1600** in creating canal patency. In some embodiments, provisions for lighting and integrated suction may be designed into the custom drill guide **1000.**

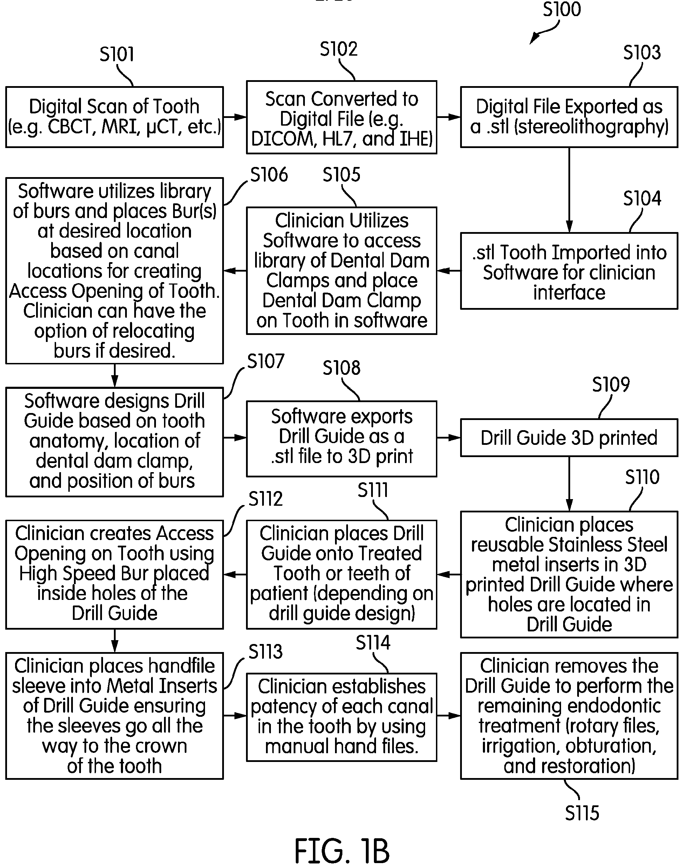

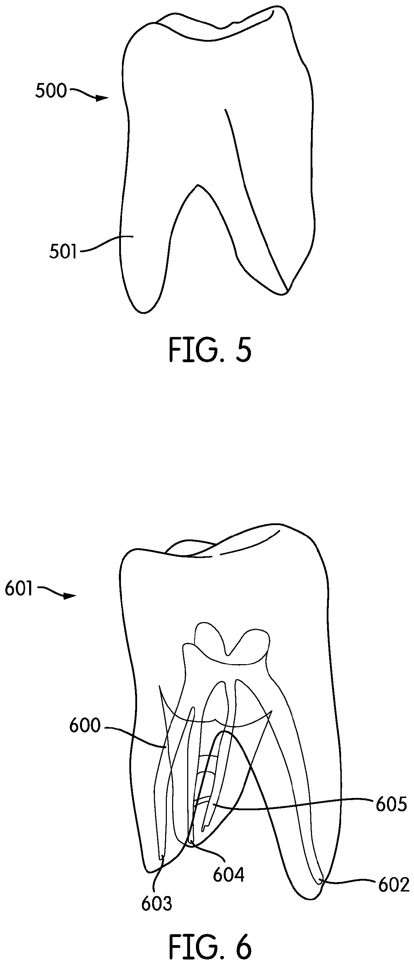

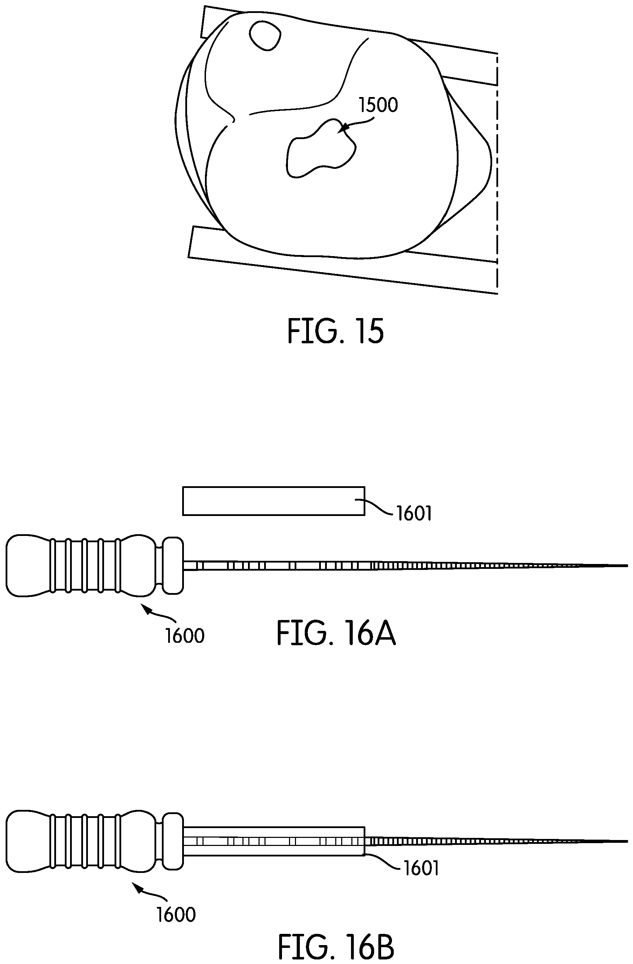

**FIG. 1B** shows a process S**100** in accordance with at least some of the embodiments herein. The process S**100** may be used to generate a custom drill guide **1000** for the purpose of creating an access opening **1500** (**FIG. 15**) in the crown of the physical tooth **500** (**FIG. 5**) and specifically for locating each canal **600** (**FIG. 6**) in the tooth and furthermore for creating patency via handfiles **1600** within each canal **600** to working length.

In this process, as illustrated by Step S**101** of **FIG. 1B****,** a clinician may scan a patient's teeth/mouth to obtain a 3D scan/image. This scan may be conducted in an area of interest in the mouth where root canal therapy is to occur. The 3D scan may be conducted using a variety of imaging technologies that may include CBCT, MRI, µCT and/or otherwise imaging technologies in order to create a digital characterization of the tooth or set of teeth and convert the digital characterization of the tooth or set of teeth into a format such as DICOM, HL**7**, IHE, etc., Step S**102**. The 3D scan may be such that the root canals are located as part of the scan. Herein, they may be located in relationship to the crown of the treated tooth.

Once the digital creation of the area of interest (e.g. tooth for root canal therapy) is obtained, the computer system **100** may be used to convert the digital scan **200** into a model/digital 3D representation **300** (having a format such as stereolithograph; .stl or 3D point cloud; .xyz or the like), Step S**103**, that may be imported into an interface, Step S**104**, and used in creating a virtual drill guide **900** specific to the corresponding location of the canals **600** of the physical tooth **500** that will be receiving the root canal therapy.

Herein, a clinician may utilize the computer system **100** to access a library of virtual dental dam clamps **700.** The virtual tooth **400** may be identified and a virtual dental dam clamp **700** may be placed and oriented on this virtual tooth **400** corresponding to the physical tooth **500** that will receive the root canal therapy, Step S**105,** as a corresponding physical dental clamp **701** would be placed for the root canal procedure. The placement may also be manually modified by the clinician. The physical dental dam clamp **701** corresponding to the virtual dental dam clamp **700** may be used to hold the dental dam **1001** in place on teeth and may also be used to fixate the drill guide onto the teeth as well.

A database **202** containing a library of virtual burs **801** may then be accessed to place virtual bur(s) **801** in a manner (such as position, angulation and the like) such that the virtual burs **801** are orientated at the orifice(s) **800** of each canal **600** within the virtual tooth **400,** Step S**106**. Herein, the treated tooth may be "interrogated" to identify the root canals within the tooth. This may be based on a density or gray scale differences between the tooth (dentin, enamel, etc.) and the canals (void space). Locations of the virtual burs **801** may then be recommended by placing the virtual burs **801** at the orifice locations of the canals **600.** The software may have the recommended locations of the virtual burs **801** to position and angulate said virtual burs **801** such that they are optimized for minimal access opening **1500** while preventing (or substantially preventing) the virtual burs **801** from interfering with each other. After the virtual burs **801** are placed in their recommended positions/angulations, the clinician may optionally reorient the virtual burs **801** by translations and rotation in or about the X, Y, and Z axes.

Once the virtual bur(s) **801** and the virtual dental dam clamp **700** locations are established, the computer system may create a design of the drill guide (virtual drill guide **900**) that incorporates the properties of these components/accessories (properties such as shape, size, orientation, and position of the virtual burs **801,** virtual dental dam clamp **700** and surrounding tooth anatomies), so that the properties of these corresponding physical components/accessories are taken into account relative to the properties (e.g., size, shape, orientation, etc..) of a custom drill guide **1000,** when designed and manufactured, Step S**107**. Herein, once the virtual burs **801** and virtual dental and dam clamp **700** are positioned on the virtual tooth. The virtual drill guide **900** may be designed by an algorithm where it creates a fixture design around the treated tooth designed to match and fixate around the crown of the treated tooth and then designs the fixture to fixate to the dental dam clamp. The holes are then created in the fixture by subtracting the volume of the burs into the fixture.

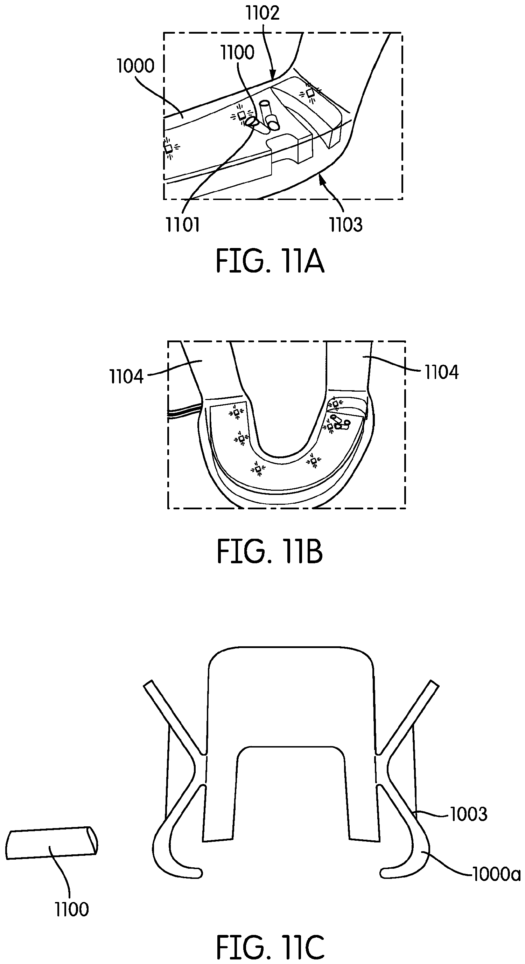

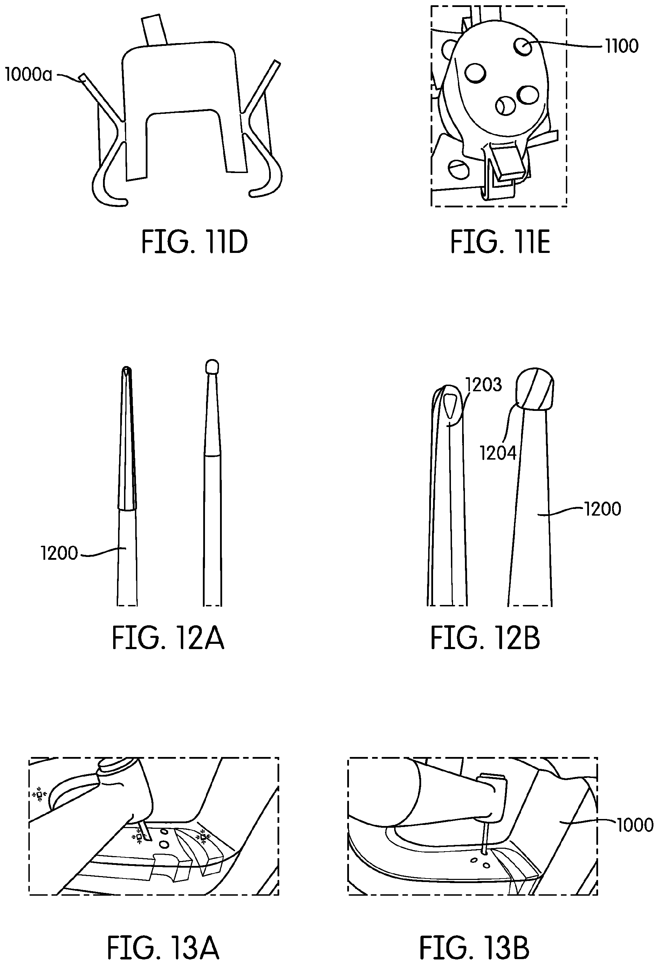

After the virtual drill guide design has been designed, a digital output file (such as a stereolithograpy file; .stl) may be exported, Step S**108** for use in creating/manufacturing a custom drill guide **1000** in Step S**109**. Once the drill guide has been manufactured or 3D printed, the clinician may place metal sleeves/inserts **1100** (**FIG. 11A**) within the holes of the drill guide, Step S**110**. The sleeves may be placed such that they are prevented from rotating and moving while creating the access opening. To ensure this, the sleeves may be designed to have an anti-rotating feature such as a key way or flat that matches holes in the drill guide and may also have a ring or stop at the top to keep it from going down further. To prevent the sleeve from coming up, it may have a compressible clip that engages at the bottom of the drill. A person of ordinary skill in the art will recognize in light of this specification that other design may be employed to achieve similar results. This may prevent the high speed burs which may be rotating at over **2000** RPM from contacting the custom drill guide **1000.** If the burs contact the custom drill guide **1000,** a material of said custom drill guide may melt, distort, etc. due to a high speed friction of the bur **1200** in contact with the 3D printed material. These metal inserts **1100** may be reusable via sterilization (steam autoclave) of the inserts after each procedure or they can be replaced/disposable.

Once the custom drill guide **1000** has the metal inserts placed inside of it, the root canal therapy procedure may begin. Herein, the clinician may place a physical dental dam clamp **701** corresponding to the virtual dental clamp **700** in conjunction with a dental dam **1001** on the patient's tooth or teeth to be treated, Step S**111**, with the physical dental clamp 701 being placed and orientated the same way as how the virtual dental clamp **700** was positioned/located in a software of the computer system **100.** The clinician may then place the custom drill guide on the tooth that will receive the root canal therapy.

As shown in Step S**112**, once the custom drill guide is placed and/or secured, the clinician may use a bur **1200** such as a high speed bur to create access openings **1500** to an orifice **800** of each canal **600** within the physical tooth **500.** Once the access opening(s) **1500** is/are created at each canal orifice **800,** the clinician may use manual stainless steel handfiles for the purpose of establishing patency for each canal within the tooth. Herein patency may be considered as a canal preparation technique in which an apical portion of the canal is maintained free of debris by recapitulation with a small file through the apical foramen. In using the handfiles, the clinician can place a handfile sleeve **1601** inside the metal insert **1100** of the custom drill guide **1000.** The handfile sleeve **1601** may be placed within the metal insert of the drill guide such that the handfile sleeve **1601** contacts the crown of the tooth, Step S**113**. In one embodiment, the handfile sleeve **1601** is reusable. In another embodiment, the handfile sleeve **1601** is disposable.

In the next step, Step S**114**, the clinician may establish patency in each canal of the tooth by using hand files. Because the clinician may use an apex locator during the process of establishing patency within each canal while using the handfile **1600,** the handfile sleeve **1601** is preferably not made from an electrically conductive material since the apex locator uses an electric circuitry concept in the determination of a working length of each canal. A metal handfile sleeve may cause a short circuit or inaccurate readings from an apex locator. The material the handfile sleeve **1601** may be made from steam autoclavable plastic material such as Polyphenylsufone (Radel), Polyetherimide (Ultem), Polyether ether ketone (PEEK), etc. or disposable produced from a 3D printable material.

The purpose of the handfile sleeve **1601** may be to allow the handfile **1600** to remain centered within the holes of the drill guide in order to prevent the location of the handfile from deviating from the canal orifice. Once the clinician establishes canal patency for each canal up to a predetermined handfile size (#**10**, #**15**, etc.), the clinician is ready to proceed with the mechanized file process of the procedure. The clinician may then remove the custom drill guide **1000** from the patient for the mechanized shaping, irrigation, and obturation process as the location of the canals and openings of the canals have been established, Step S**115**.

In an alternative embodiment of the present invention, one or more teeth may be separated/segmented from the rest of the model/digital 3D representation **300** such that a user/clinician may plan or design the virtual drill guide **900** in isolation prior to production of the custom drill guide **1000.** That way the placement of virtual burs **801** may be visualized more clearly in order to design the virtual drill guide **900.**

In another alternative embodiment, accessories for use in a treatment procedure such as the dental dam clamp, burs, handfile sleeve, metal inserts, handfile and the like may be individually designed in the software based on dimensions of the digital 3D representation **300** for manufacturing.

### Custom Drill guide

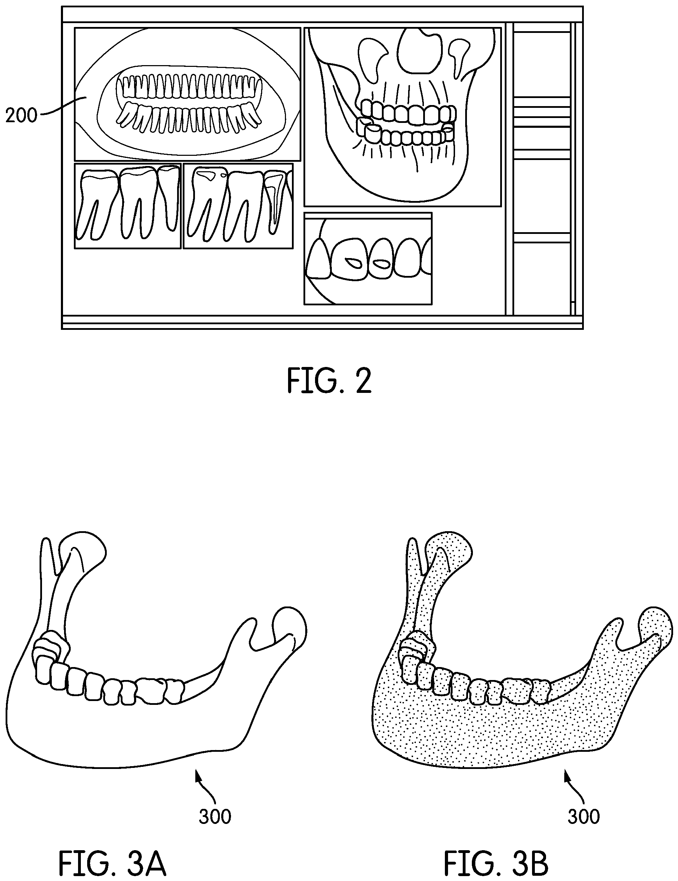

The custom drill guide **1000** and the process S**100** of creating the custom drill guide **1000** will now be described in more detail with reference **FIGS. 2** - **21** as well **FIG. 1B****.** Any or all of the steps described may be performed automatically by the computer system, manually by a clinician or any combinations thereof.

As shown in **FIG. 11A****,** the custom drill guide **1000** may include one or more holes **1101** each beginning at a first surface **1102** and running through a body of the physical drill guide to a second surface **1103** opposite the first surface **1102.** The custom drill guide **1000** may be dimensioned to accommodate one or more physical burs, one or more dental dam clamps and to fit on one or more teeth as described herein. The dimensions of the one or more holes 1101 may be configured to receive the physical burs at a predetermined angle and position in order to (i) allow the creation of an access opening to one or more physical canals and (ii) to provide direction in the establishment of canal patency in the treated tooth. The physical dental dam clamp **701** corresponding to the virtual dental dam clamp **700** may be used to hold the dental dam **1001** in place and may also be used to fixate the custom drill guide **1000** onto teeth as well. This may be achieved during the design phase through the presence of virtual arms **704** and virtual head **705** on the virtual dental dam clamp **700** that are dimensioned to be affixed to one or more teeth. Space occupied by the virtual dental dam clamp **700** may be taken into consideration when creating the virtual drill guide **900** such as by subtracting said space from the virtual drill guide **900.** The virtual drill guide **900** may be designed to engage the portions of the virtual dental dam clamp **700** such as the virtual arms or head so that corresponding custom drill guide **1000** is tightly secured on one or more teeth during treatment (such as procedures with high speed burs) without moving. Various forms of engagement between the custom drill guide **1000** and the head **705a** or arms **704a** or any other part of the physical dental dam clamp **701** are achievable. For example, in **FIGS. 10A-B,** a head slot **1002** in the custom drill guide **1000** may be dimensioned to receive a head **705a** of a physical dental dam clamp **701** in order to secure the custom drill guide **1000** on the teeth. In **FIG. 10D****,** the extension **1003** of the custom drill guide **1000** may be dimensioned to engage the arms **704a** of the physical dental dam clamp **701.**

Using, tooth **500 (****FIG. 5****)** such as a mandibular molar **501,** a scan of which is shown in **FIG. 6****,** having **4** canals including a Palatal **602,** Distal (distobuccal) **603,** Mesial Buccal 1 **604** and Mesial Buccal 2 **605** canals the custom drill guide and process will be described further.

**FIG. 2** shows an example of the output provided when performing a scan such as a CBCT (cone beam computed tomography) scan of the patient. This digital scan **200** may be converted into a model/digital 3D representation **300** such as a 3D representation of the mandible as shown in **FIG. 3A****.** Said model/ digital 3D representation **300** may be, for example, in an stl format as shown in **FIG. 3A** or in a point cloud format as shown in **FIG. 3B** or the like.

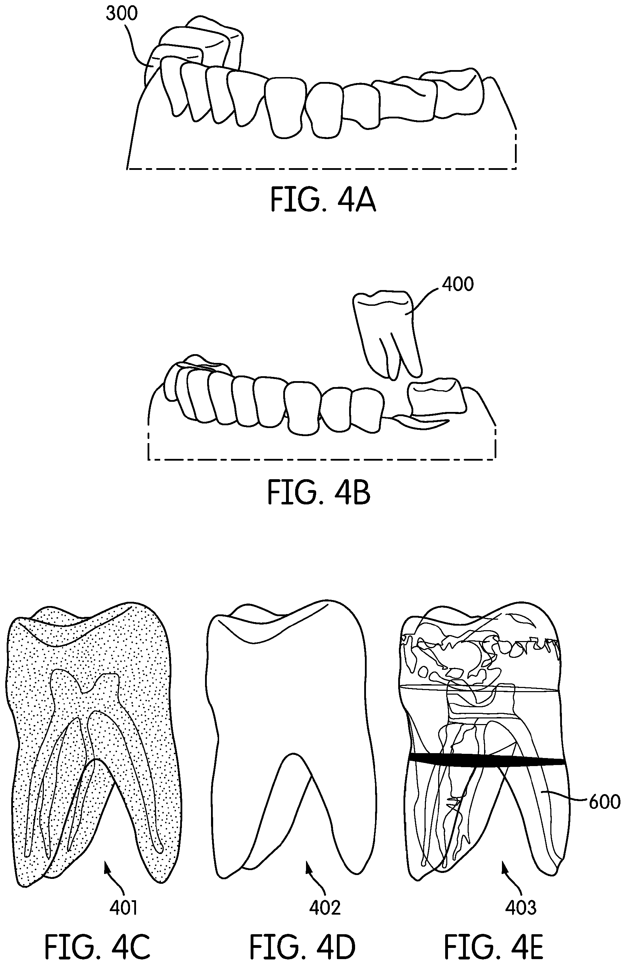

**FIGS. 4A-4E** show the mandibular molar **501** identified in different forms. Specifically, Figure **4A-4B** show a model/digital 3D representation **300** of the mandible, said model/digital 3D representation **300** includes a virtual tooth **400** which represents the mandibular molar **501.** A digital image output mesh file **401, 402** (in a stereolithography, point cloud, format or the like etc.) such as is shown in **FIGS. 4C - 4D** may be imported into a software of the computer system **100** wherein the software may also display a modified virtual form of the tooth **403 (****FIG. 4E****)** and the canals **600** within the tooth. Canals may be seen in the point cloud and .stl formats. These may also be converted into a solid modeling format as well such as STEP, IGES, etc. as well to see the canals without obstruction.

In an exemplary embodiment as shown in **FIG. 6****,** a MicroCT image **601** (or other image such as a CBCT image, MRI image or the like) of the mandibular molar **501** may show where the internal canal morphology may be located in relationship with the outer tooth anatomy.

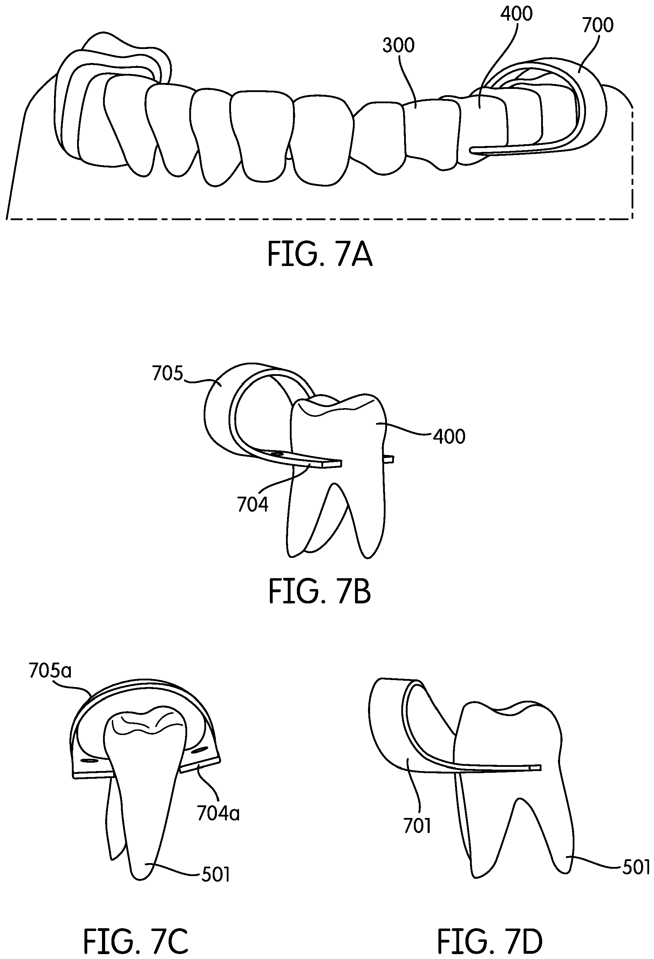

As shown in **FIG. 7** in order to create the virtual drill guide **900** that may be used in manufacturing the custom drill guide **1000** a virtual dental dam clamp **700** may be placed (such as manually or automatically) on the virtual tooth **400** as shown in **FIG. 7A** and **FIG. 7B****.** The placement may be performed to match or substantially match the placement of a corresponding physical dental clamp **701** on the mandibular molar **501 (****FIG. 7C - 7D). FIGS. 7A-7D** show a comparison of the placement of a dental clamp in software versus the actual placement of the corresponding physical dental dam clamp **701** relative to a physical tooth **500** (the mandibular molar **501).**

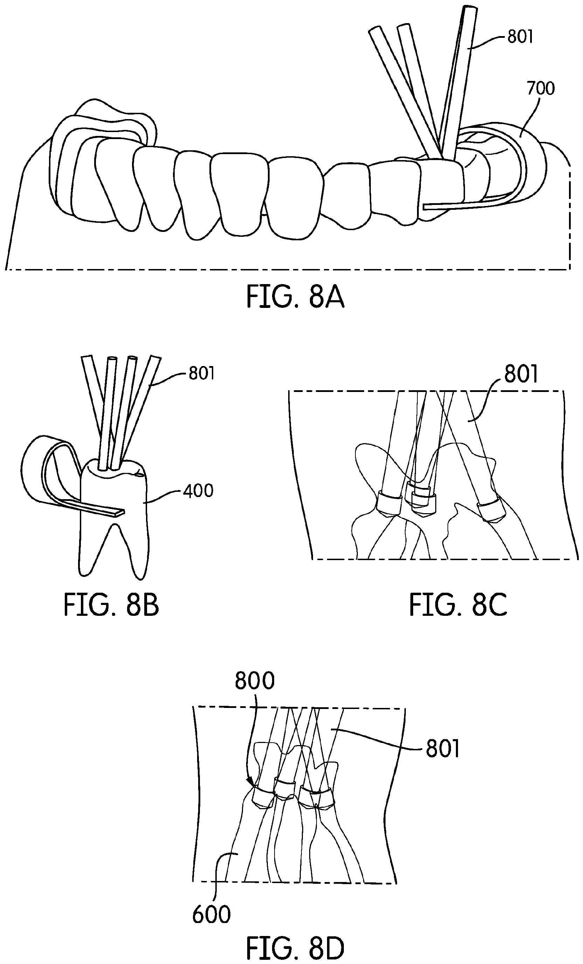

**FIG. 8A** shows that once the virtual dental dam clamp **700** has been placed onto the tooth, virtual burs **801** may be selected from a library and each of them may be automatically placed by the software based on a predefined algorithm and/or furthermore can be placed (through, for example, rotating and translating them in the X, Y, and Z planes) by the user where a cutting end of the virtual bur **801** may be positioned at each canal orifice **800 (****FIGS. 8C-8D****)** of the tooth and may be oriented to minimize the size of the access opening **1500.** More specifically, the access opening **1500** may be the space removed from the crown of the tooth in order to allow the clinician to locate and place handfiles and dental drills into the orifices of the root canals. The objective may be to create an access opening or access openings **1500** that are large enough to provide for the location and placement of the handfiles and dental drills to the orifices of the root canals but not so large that material is unnecessarily removed from the crown of the tooth.

Once the location and orientation of the virtual burs **801** have been determined a virtual drill guide **900** may be created. This may be achieved, for example, by taking into consideration dimensions of the patient's oral cavity and allowing for a necessary material thickness for the drill guide and height requirements for the top of the drill guide to allow for a patient's mouth to open and still allow for burs, handfiles, and drills to go into the drill guide, i.e. properties of the one or more placed virtual burs, properties of the virtual dental dam clamp and anatomies of one or more virtual teeth may be taken into consideration to create the virtual drill guide **900.**

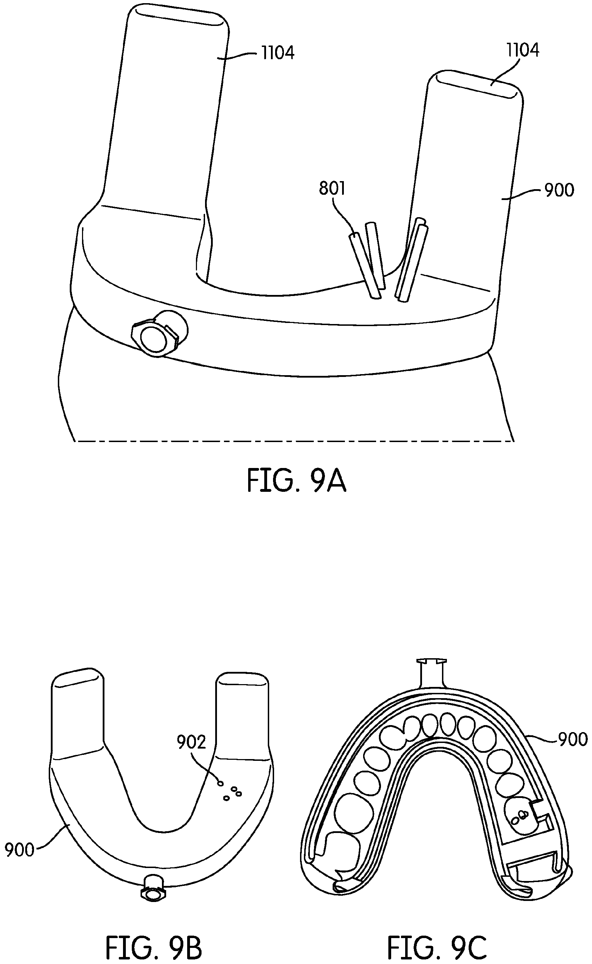

This virtual drill guide **900** may be designed using an input unit **130** and a display unit **128.** **FIGS. 9A-9H** shows examples of the design of the virtual drill guide **900.** **FIGS. 9A-****9C** show a virtual drill guide **900** that may be seated on, for example, a lower jaw of a patient and **FIGS. 9D-9H** show the design of another virtual drill guide that may be seated on a single tooth, such as a mandibular molar of a patient. In an embodiment, the design of the virtual drill guides **900, 901** may be automatic and may take into account the location of the virtual burs **801** and the virtual dental dam clamp **700** to ensure that the produced custom drill guide **1000** will fixate (though removable) onto the physical tooth or teeth and have the holes **1101 (****FIG. 11A****)** within (and extending therethrough) the drill guide in a correct orientation relative to the direct physical burs. In an exemplary embodiment, the holes in the virtual drill guide **900** (where the virtual burs **801** are located) may be created by subtracting the space where the burs are located (i.e. removal of volume between the virtual drill guide **900** and virtual burs **801**). Moreover, space needed for the location of the dental dam clamp may be subtracted from the virtual drill guide **900.** Of course, other ways of creating the virtual drill guide will be recognized after reading this specification.

Once the drill guide design is completed the design of the drill guide may be exported into a format (e.g. stereolithography) that is capable of being sent/communicated for manufacturing/production.

**FIGS. 10A-10D****,** as well as **FIGS. 9A-9C** and **11A,** show examples of the custom drill guide **1000, 1000a** and how they are affixed to the patient's tooth/teeth. For instance, as shown in **FIG. 10D****,** there are two extensions **1003** on each side of the custom drill guide **1000a** that fit around the arms **704a** of the physical dental dam clamp **701.** In **FIG. 11B****,** there are 2 other extensions **1104** from the back of the custom drill guide **1000** where the patient's jaw may set down on and hold said custom drill guide **1000** down in place. **FIG. 9** also shows these 2 other extensions **1104.**

After the manufacturing, metal sleeves **1100** may be placed into the holes **1101,** in the drill guide, corresponding to the virtual holes **903** to prevent the high speed dental bur from contacting the custom drill guides **1000, 1000a** as shown in **FIG. 11A-11E****,** which show different views of the printed guide. Contact of the high speed bur with the drill guide may cause the holes in the guide to melt, distort, etc.

**FIGS. 12 A-B** shows example burs **1200** that may be used with the present invention. **FIG. 12B** shows a magnified view of **FIG. 12A****,** illustrating a multi-purpose tapered end cutting bur **1203** and a round side cutting bur **1204.** In a preferred embodiment herein, a structure of the bur **1200** used combines features from each bur of **FIGS. 12A-12B****.** The bur may be a tapered end cutting bur **1203** with a reduced length of the taper as shown in **1204.** The reason an end cutting bur may be used for this application may be because during advancement of the bur into and/or within the drill guide, the end of the bur may be penetrating and cutting into the hard enamel of the tooth crown. A side cutting bur may not be able to achieve the efficient cutting of the crown when being used with the drill guide. The taper of the bur **1200** may need to be as small as possible, so that the bur **1200** may remain centered within the metal insert **1100** in the drill guide. If the bur is tapered where the taper is longer or as long as the metal insert in the drill guide, it may become more difficult for the bur to remain centered within the hole of the drill guide. For example, if only the tapered portion of the bur is inside of the metal insert in the drill guide, the bur may go off center from the drill guide and may also be angulated relative to the center of the hole in the drill guide. This will then create an access opening in the tooth that is not in alignment with the root canal in the tooth.

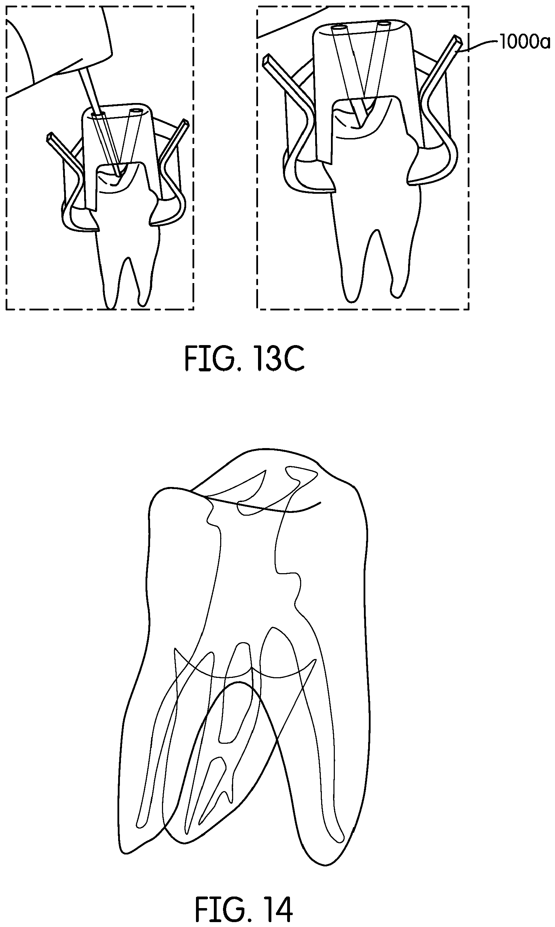

Once the corresponding physical dental dam clamp **701** has been placed on the physical tooth/teeth **500,** the custom drill guide **1000, 1000**a may be placed as shown in **FIGS. 13A-13C** and then the clinician can proceed in advancing the high speed bur inside of the drill guide to create the access openings **1500** within the tooth to the orifice **800** of the canals.

**FIG. 14** shows a µCT scans of the mandibular molar **501** after the access openings **1500** are created within the tooth.

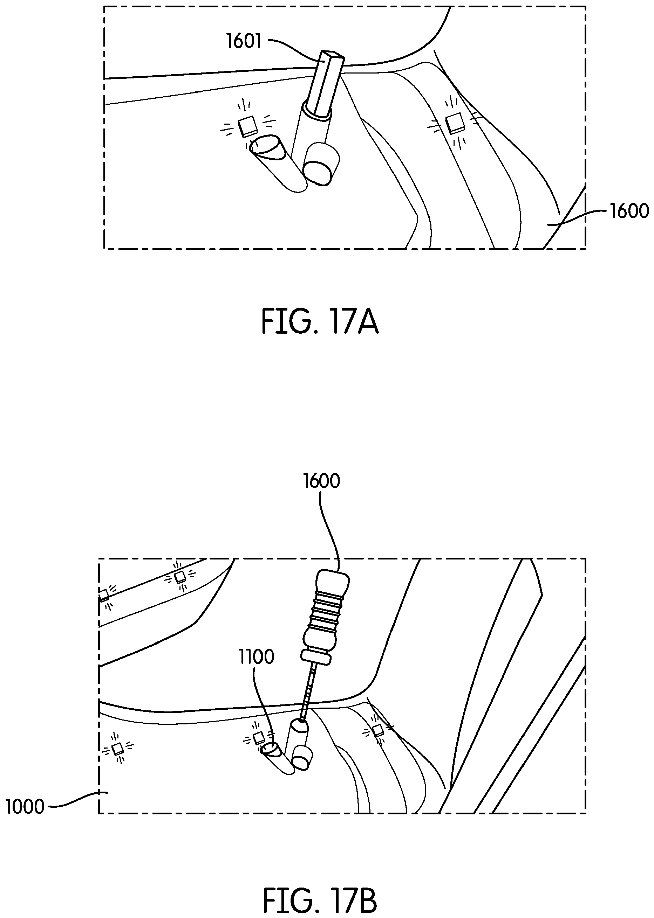

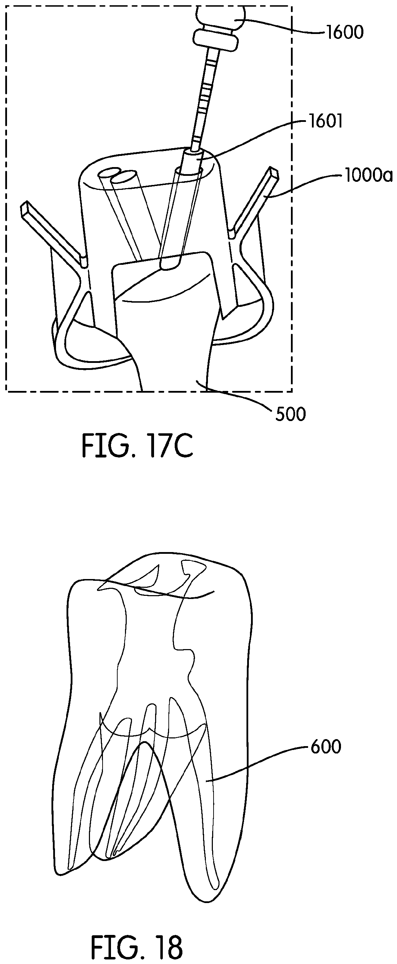

In **FIG. 15****,** a top view of the crown of the mandibular molar **501** showing the size of the access opening **1500** created. Once the access openings **1500** have been created with the high speed bur to locate each canal **600** in the tooth, the clinician may use handfiles **1600** such as manual stainless steel handfiles to create a path in each canal **600** to allow mechanized files to be used to shape the canal **600.** In order to use the handfiles **1600** with the custom drill guide **1000,** handfile sleeves **1601** may be utilized to help maintain the centering of the handfile to the orifice opening of the canal. **FIG. 16 A-B** shows the handfile sleeve **1601** and how it fits onto the handfile **1600.** The handfile sleeve **1601** may be made from a sterilizable, steam autoclavable material for reuse or from a disposable plastic such as 3D printed material. The material of the handfile sleeve is preferably not electrically conductive in order that apex locators can still be used in conjunction with the handfile when the clinician is establishing canal patency and working length for each canal. Herein, the clinician may place the handfile sleeve into the metal insert **1100** located within the custom drill guide **1000** such that the handfile sleeve **1601** makes contact with the crown of the tooth. The clinician may then advance the handfile **1600** into the handfile sleeve **1601** which will allow the handfile **1600** to be centered and enter into the orifice of the canal as shown in **FIGS. 17A-C.**

**FIG. 18** shows a µCT of the mandibular molar **501** where each canal has been created patent up to a #**15** Size K-File using the custom drill guide **1000** with handfile sleeve **1601.** Once the canals **600** have been opened up to a predetermined size defined by the clinician using the handfiles **1600,** the clinician may remove the drill guide from the tooth/teeth. The remaining processes of using mechanized files, irrigation, and obturation may be performed without the use of the custom drill guide **1000.**

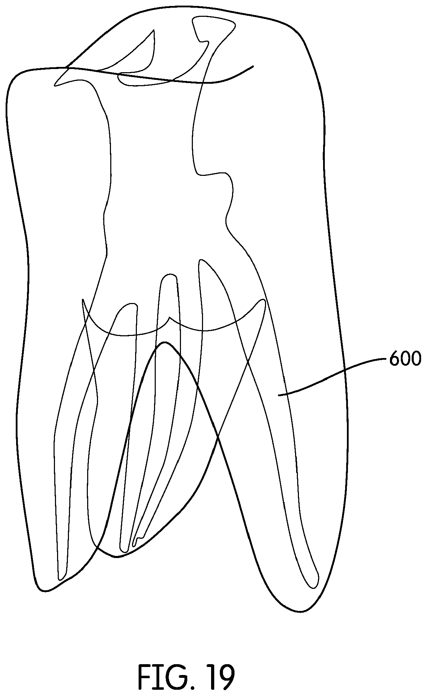

**FIG. 19** shows a µCT of the mandibular molar **501** which was scanned after each canal **600** was shaped up to a 25.07 variable tapered size. The mandibular molar **501** was then irrigated using NaOCI and EDTA ultrasonically activated. After irrigation the mandibular molar **501** was obturated using a Single Cone Obturation Technique using Sealer and GuttaPercha points matching the file shape.

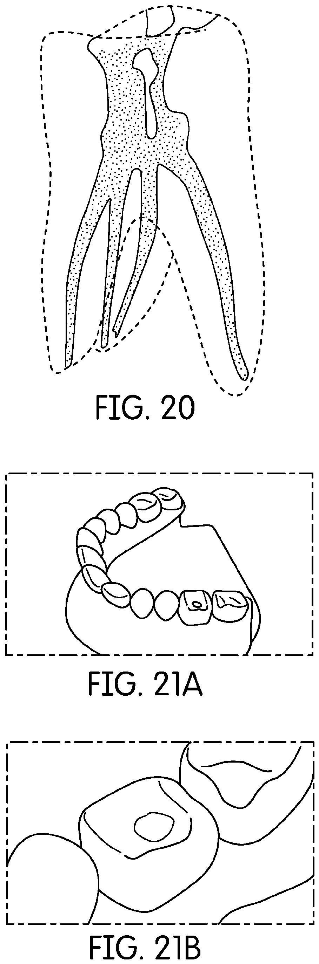

**FIG. 20** shows the µCT scan of the mandibular molar **501** after obturation and FIG. 21A-B show the mandibular molar **501** in the patient's mouth after obturation.

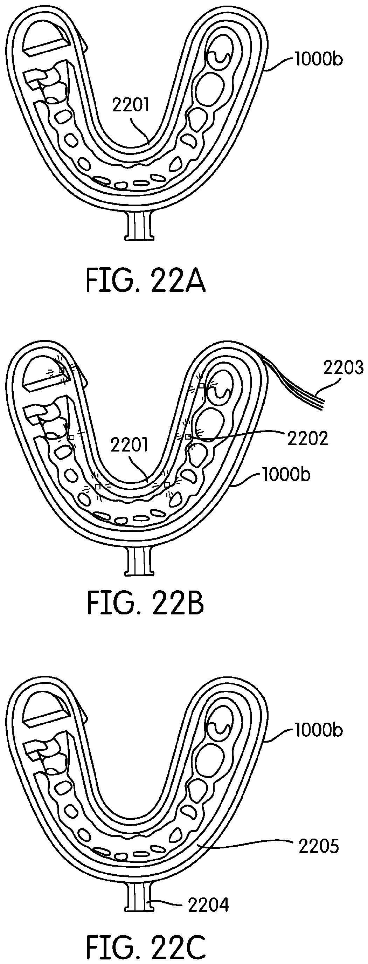

Turning now to **FIGS. 22-23****,** further embodiments of the present invention will be discussed. As shown in **FIGS. 22A-C,** the custom drill guide **1000**b may have a channel **2201** for light integration such as for receiving a light source **2202,** such as an LED light source, or a connection to a light source in order to illuminate the mouth during treatment. The custom drill guide may also have a connection **2203** (such as insulated cables or wires) to a power source (not shown). The connection **2203** and the power source that may be preferably housed in the custom drill guide **1000b** in one embodiment. In another embodiment as shown in **FIG. 22C** the custom drill guide **1000b** may have a connector **2204** for connection to a suction system (not shown) and a channel for suction integration **2205** to remove liquid or debris from the patient's mouth during treatment.

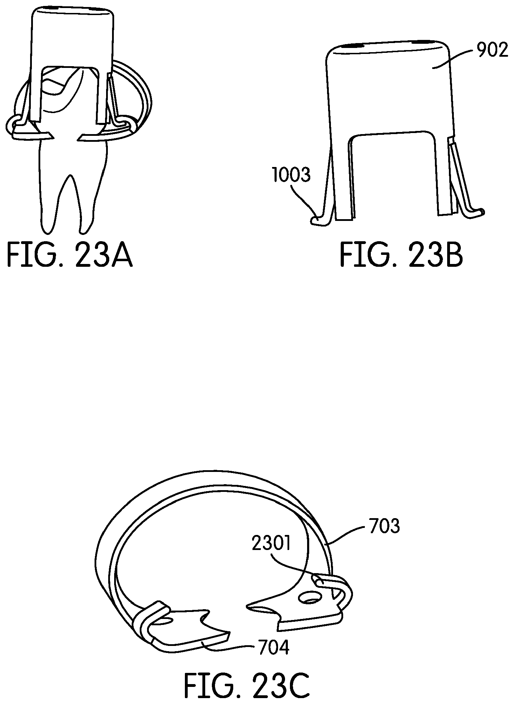

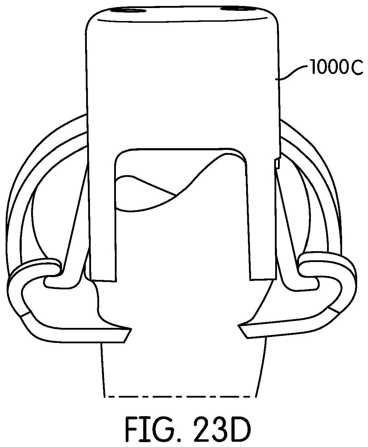

**FIGS. 23A-D** show yet another embodiment of the custom drill guide **1000**c. In these figures, a design of a second virtual drill guide **902** is shown along with another virtual dental clamp **703.** Herein, a specific dental dam clamp may engage the second virtual drill guide **902.** The specific dental dam clamp may be designed and manufactured specifically to accommodate and attach to a custom drill guide **1000c.** The virtual arms **704** on the second virtual dental dam clamp **703** may engage the extensions **1003** on the second virtual drill guide **902** through the U-shaped tabs **2301.** The extensions **1003** on the custom drill guide **1000c** may be compressible and may be compressed when being placed on the clamp and then released to hold the custom drill guide **1000c** onto the clamp. This may make it easier to place the custom drill guide **1000c** on the tooth and clamp.

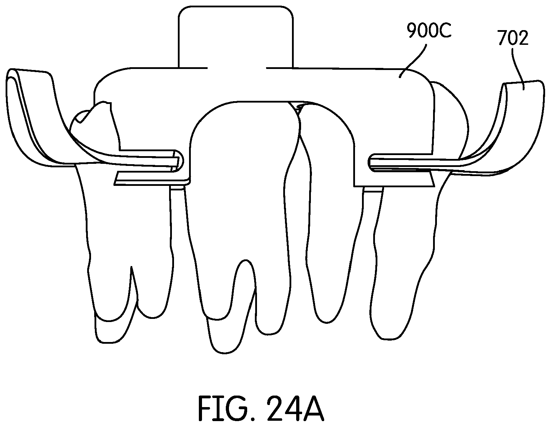

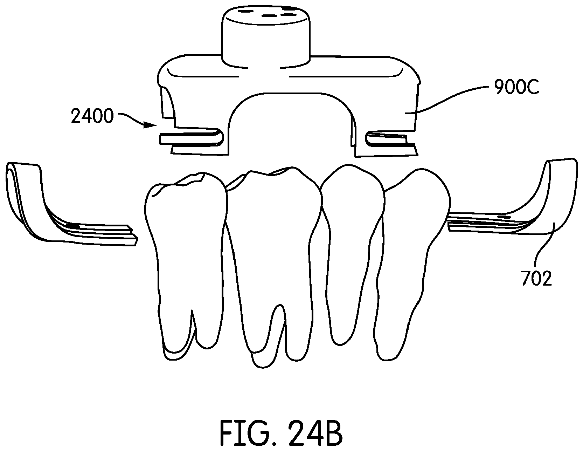

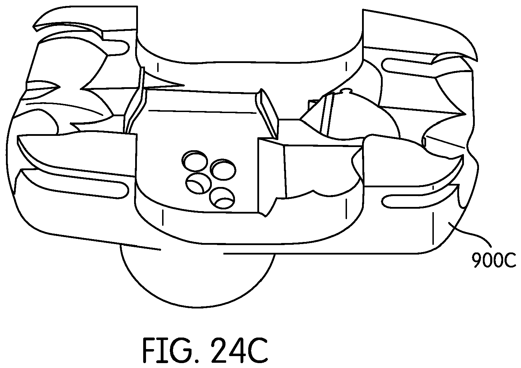

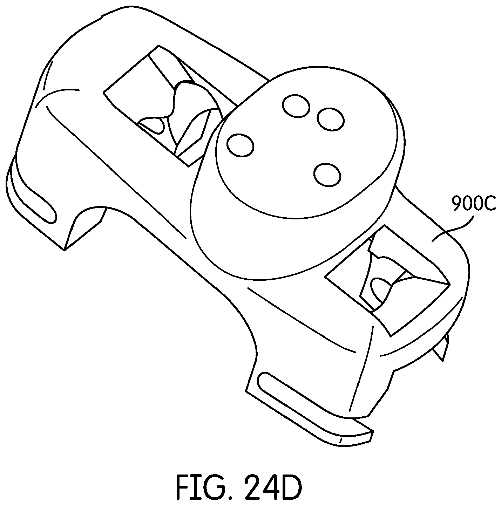

In **FIGS. 24 A-D,** a third virtual drill guide **900c** which may be manufactured into another custom drill guide is shown. The figures show various perspective views of the guide. The third virtual dental dam clamp **702** corresponding to the third virtual drill guide **900**c may be designed to fit into the aperture **2400** of the third virtual drill guide **900**c in order to keep the third virtual drill guide **900c** on the teeth during treatment. Herein, multiple teeth may be clamped on using a plurality of similar or different virtual dental dam clamps **702** as shown in **FIGS. 24 A-B.** In this alternative embodiment, dental dam clamp(s) may be placed on teeth adjacent to the tooth to be treated instead of on the said tooth to be treated. This may provide more flexibility to the clinician in ensuring that the orientation of the fixture is correct in relationship with the tooth to be treated.

It will be understood by a person of ordinary skill in the art, in light of this description that other methods, processes and embodiments may be implemented in light of the descriptions provided.

### Computer System for Producing a Drill Guide

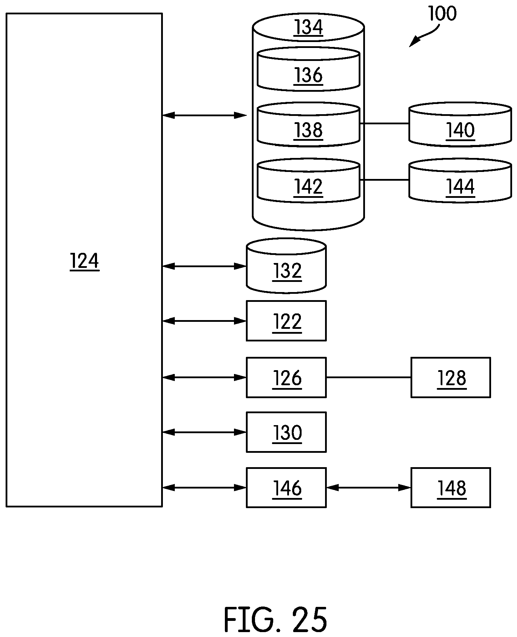

Having described the process **S100** of **FIG. 1B** reference will now be made to FIG. **25****,** which shows a block diagram of a computer system **100** that may be employed in accordance with at least some of the example embodiments herein. Although various embodiments may be described herein in terms of this exemplary computer system **100,** after reading this description, it may become apparent to a person skilled in the relevant art(s) how to implement the invention using other computer systems and/or architectures.

The computer system **100** may include or be separate from a CAD/CAM System **206** that may be used in designing and/or manufacturing the drill guide. The computer system may also include at least one computer processor **122,** user interface **126** and input unit **130.** The input unit **130** in one exemplary embodiment may be used by the dentist/clinician along with a display unit **128** such as a monitor to design the virtual drill guide **900** for manufacturing. In another exemplary embodiment herein, the input unit **130** is a finger or stylus to be used on a touchscreen interface display device (not shown). The input unit **130** may alternatively be a gesture recognition device, a trackball, a mouse or other input device such as a keyboard or stylus. In one example, the display unit **128,** the input unit **130,** and the computer processor **122** may collectively form the user interface **126.**

The computer processor **122** may include, for example, a central processing unit, a multiple processing unit, an application-specific integrated circuit ("ASIC"), a field programmable gate array ("FPGA"), or the like. The processor **122** may be connected to a communication infrastructure **124** (e.g., a communications bus, or a network). In an embodiment herein, the processor **122** may receive a request for creating a virtual drill guide **900** and may automatically create or allow the creation of the virtual drill guide **900** using the CAD/CAM System **206** and the database **202.** The processor **122** may achieve this by loading corresponding instructions stored in a non-transitory storage device in the form of computer-readable program instructions and executing the loaded instructions.

The computer system **100** may further comprise a main memory **132,** which may be a random access memory ("RAM") and also may include a secondary memory **134.** The secondary memory **134** may include, for example, a hard disk drive **136** and/or a removable-storage drive **138.** The removable-storage drive **138** may read from and/or write to a removable storage unit **140** in a well-known manner. The removable storage unit **140** may be, for example, a floppy disk, a magnetic tape, an optical disk, a flash memory device, and the like, which may be written to and read from by the removable-storage drive **138.** The removable storage unit **140** may include a non-transitory computer-readable storage medium storing computer-executable software instructions and/or data.

In further alternative embodiments, the secondary memory **134** may include other computer-readable media storing computer-executable programs or other instructions to be loaded into the computer system **100.** Such devices may include a removable storage unit **144** and an interface **142** (e.g., a program cartridge and a cartridge interface); a removable memory chip (e.g., an erasable programmable read-only memory ("EPROM") or a programmable read-only memory ("PROM")) and an associated memory socket; and other removable storage units **144** and interfaces **142** that allow software and data to be transferred from the removable storage unit **144** to other parts of the computer system **100.**

The computer system **100** also may include a communications interface **146** that enables software and data to be transferred between the computer system **100** and external devices. Such an interface may include a modem, a network interface (e.g., an Ethernet card, a wireless interface, a cloud delivering hosted services over the internet, etc.), a communications port (e.g., a Universal Serial Bus ("USB") port or a FireWire^{®} port), a Personal Computer Memory Card International Association ("PCMCIA") interface, Bluetooth^{®}, and the like. Software and data transferred via the communications interface **146** may be in the form of signals, which may be electronic, electromagnetic, optical or another type of signal that may be capable of being transmitted and/or received by the communications interface **146.** Signals may be provided to the communications interface **146** via a communications path **148** (e.g., a channel). The communications path **148** may carry signals and may be implemented using wire or cable, fiber optics, a telephone line, a cellular link, a radio-frequency ("RF") link, or the like. The communications interface **146** may be used to transfer software or data or other information between the computer system **100** and a remote server or cloud-based storage.

One or more computer programs or computer control logic may be stored in the main memory **132** and/or the secondary memory **134.** The computer programs may also be received via the communications interface **146.** The computer programs may include computer-executable instructions which, when executed by the computer processor **122,** cause the computer system **100** to perform some or all of the methods described herein.

In another embodiment, the software may be stored in a non-transitory computer-readable storage medium and loaded into the main memory **132** and/or the secondary memory **134** of the computer system **100** using the removable-storage drive **138,** the hard disk drive **136,** and/or the communications interface **146..**

Implementation of other hardware and software arrangements so as to perform the functions described herein will be apparent to persons skilled in the relevant art(s) in view of this description.

## Claims

1. A method for creating a virtual drill guide (900) for manufacturing a physical drill guide (1000), said method comprising:
obtaining a digital 3D representation (300) of one or more physical teeth (500);
obtaining a location of one or more canals (600) in the digital 3D representation (300);
placing a virtual dental dam clamp (700) in the digital 3D representation (300) based on a desired location and orientation of a corresponding physical dental dam clamp (701);
placing one or more virtual burs (801) in the digital 3D representation (300) based on the obtained location of the one or more canals (600);
creating a virtual drill guide (900) based on (i) at least one property of the one or more placed virtual burs (801), (ii) at least one property of the virtual dental dam clamp (700) and (iii) an anatomy of one or more virtual teeth (400);
wherein the virtual drill guide (900) is designed such that the physical drill guide (1000) to be manufactured corresponds to the virtual drill guide (900);
wherein the physical drill guide (1000) includes one or more physical holes (1101), each physical hole being configured to receive a physical bur at a predetermined angle and position in order (i) to allow the creation of an access opening (1500) to one or more physical canals (600) in the one or more physical teeth (500) and (ii) to provide guidance in the establishment of canal patency in the one or more physical teeth (500);
wherein the one or more physical holes (1001) are based on the location of the placed virtual burs (801), respectively, of the virtual drill guide (900);
manufacturing the physical drill guide (1000) based on the virtual drill guide (900).

2. The method according to Claim 1, further comprising placing metal inserts (1100) in the one or more physical holes (1101) and creating an access opening (1500) on the one or more physical teeth (500) using a bur placed inside the metal insert of the physical drill guide (1000).

3. The method according to Claim 2, further comprising placing a handfile sleeve (1601) into the metal insert (1100) until contact is made with a crown of the one or more physical teeth (500) and establishing canal patency in the one or more physical teeth (500) using a handfile (1600).

4. The method according to Claim 1, wherein the properties of the one or more placed virtual burs (801) and the at least one property of the dental dam clamp (700) are selected from one or more properties including shape, size, orientation, and position.

5. The method according to Claim 1, wherein one or more virtual teeth (400) are segmented from the digital 3D representation (300) to allow for isolated designing of the virtual drill guide (900).

6. The method according to Claim 1, wherein the one or more virtual burs (801) are placed by rotating and translating them such that a cutting end of the one or more virtual burs are placed at a canal orifice (800).

7. The method according to Claim 1, wherein the virtual drill guide (900) is configured to be seated on a single tooth or a plurality of adjacent teeth.

8. The method according to Claim 1, wherein the virtual drill guide (900) is automatically designed.

9. The method according to Claim 1, wherein the virtual drill guide (900) is configured using at least input from a user.

10. The method according to Claim 1, wherein the virtual drill guide (900) includes a channel (2201) for receiving a light source (2202).

11. The method according to Claim 1, wherein the virtual drill guide (900) includes a connector (2204) for connection to a suction system.

12. The method according to Claim 1, wherein the virtual drill guide (900) is configured to accommodate a plurality of virtual dental dam clamps (702).

13. The method of Claim 1, wherein the physical drill guide (900) is dimensioned to engage one or more parts of the one or more dental dam clamps (700) in order to secure the physical drill guide onto the one or more teeth.

14. The method of Claim 13, wherein the physical drill guide includes a slot (1002) that receives a head (705a) of the one or more dental dam clamps.

15. The method of Claim 13, wherein the physical drill guide (1000) includes an extension (1003) that engages arms (704a) of the one or more dental dam clamps (701).

16. The method Claim 1, wherein the physical drill guide (1000) further comprising a connector (2204) configured to connect to a suction system in order to remove liquid and debris from a patient's oral cavity during treatment.

17. The method of Claim 1, further comprising a channel (2201) disposed the body of the physical drill (1000) and configured to house light for illuminating a patient's oral cavity during treatment.

18. A non-transitory computer-readable storage medium storing a program which, when executed by a system according to claim 19, causes the system (1) to perform a procedure according to any one of the method claims 1 to 17

19. A system (1) for creating a virtual drill guide for manufacturing a physical drill guide, said system comprising a processor configured to execute the steps according to any one of claims 1 to 17.

## Patentansprüche

1. Verfahren zur Erzeugung einer virtuellen Bohrführung (900) zur Herstellung einer physischen Bohrführung (1000), wobei das genannte Verfahren Folgendes umfasst:
Erhalten einer digitalen 3D-Darstellung (300) eines oder mehrerer physischer Zähne (500);
Bestimmung einer Position eines oder mehrerer Kanäle (600) in der digitalen 3D-Darstellung (300);
Platzieren einer virtuellen Kofferdam-Klammer (700) in der digitalen 3D-Darstellung (300), basierend auf einer gewünschten Position und Ausrichtung einer entsprechenden physischen Kofferdam-Klammer (701);
Platzieren eines oder mehrerer virtueller Bohrer (801) in der digitalen 3D-Darstellung (300), basierend auf der bestimmten Position des einen oder mehrerer Kanäle (600);
Erstellen einer virtuellen Bohrführung (900), basierend auf (i) mindestens einer Eigenschaft des einen oder mehrerer platzierter virtueller Bohrer (801), (ii) mindestens einer Eigenschaft der virtuellen Kofferdam-Klammer (700) und (iii) einer Anatomie von einem oder mehreren virtuellen Zähnen (400);
wobei die virtuelle Bohrführung (900) so gestaltet ist, dass die herzustellende physische Bohrführung (1000) der virtuellen Bohrführung (900) entspricht;
wobei die physische Bohrführung (1000) ein oder mehrere physische Löcher (1101) umfasst, wobei jedes physische Loch so konfiguriert ist, dass es einen physischen Bohrer in einem vorbestimmten Winkel und einer vorbestimmten Position aufnimmt, um (i) die Erstellung einer Zugangsöffnung (1500) zu einem oder mehreren physischen Kanälen (600) in dem einen oder mehreren physischen Zähnen (500) zu ermöglichen und (ii) eine Führung bei der Schaffung der Kanaldurchgängigkeit in dem einen oder mehreren physischen Zähnen (500) bereitzustellen;
wobei das eine oder mehrere physische Löcher (1001) auf der Position der jeweils platzierten virtuellen Bohrer (801) der virtuellen Bohrführung (900) basieren;
Herstellen der physischen Bohrführung (1000), basierend auf der virtuellen Bohrführung (900).

2. Verfahren nach Anspruch 1, das ferner das Platzieren von Metalleinsätzen (1100) in das eine oder mehrere physische Löcher (1101) und das Erstellen einer Zugangsöffnung (1500) an dem einen oder mehreren physischen Zähnen (500) unter Verwendung eines Bohrers umfasst, der im Inneren des Metalleinsatzes der physischen Bohrführung (1000) platziert ist.

3. Verfahren nach Anspruch 2, das ferner das Platzieren einer Handfeilenhülse (1601) in den Metalleinsatz (1100) umfasst, bis ein Kontakt mit einer Krone des einen oder mehrerer physischer Zähne (500) hergestellt ist, und die Schaffung der Kanaldurchgängigkeit in dem einen oder mehreren physischen Zähnen (500) unter Verwendung einer Handfeile (1600).

4. Verfahren nach Anspruch 1, wobei die Eigenschaften des einen oder mehrerer platzierter virtueller Bohrer (801) und die mindestens eine Eigenschaft der Kofferdam-Klammer (700) aus einer oder mehreren Eigenschaften einschließlich Form, Größe, Ausrichtung und Position ausgewählt werden.

5. Verfahren nach Anspruch 1, wobei ein oder mehrere virtuelle Zähne (400) aus der digitalen 3D-Darstellung (300) segmentiert werden, um eine isolierte Gestaltung der virtuellen Bohrführung (900) zu ermöglichen.

6. Verfahren nach Anspruch 1, wobei der eine oder mehrere virtuelle Bohrer (801) durch Drehen und Verschieben so platziert werden, dass ein Schneidende des einen oder mehrerer virtueller Bohrer an einer Kanalöffnung (800) platziert wird.

7. Verfahren nach Anspruch 1, wobei die virtuelle Bohrführung (900) so konfiguriert ist, dass sie auf einem einzelnen Zahn oder einer Vielzahl von benachbarten Zähnen sitzt.

8. Verfahren nach Anspruch 1, wobei die virtuelle Bohrführung (900) automatisch entworfen wird.

9. Verfahren nach Anspruch 1, wobei die virtuelle Bohrführung (900) mindestens unter Verwendung von Eingaben eines Benutzers konfiguriert wird.

10. Verfahren nach Anspruch 1, wobei die virtuelle Bohrführung (900) einen Kanal (2201) zur Aufnahme einer Lichtquelle (2202) aufweist.

11. Verfahren nach Anspruch 1, wobei die virtuelle Bohrführung (900) ein Verbindungsstück (2204) zum Anschluss an ein Absaugsystem beinhaltet.

12. Verfahren nach Anspruch 1, wobei die virtuelle Bohrführung (900) so konfiguriert ist, dass sie eine Vielzahl von virtuellen Kofferdam-Klammern (702) aufnehmen kann.

13. Verfahren nach Anspruch 1, wobei die physische Bohrführung (900) so dimensioniert ist, dass sie mit einem oder mehreren Teilen der einen oder mehreren Kofferdam-Klammern (700) in Eingriff kommt, um die physische Bohrführung an dem einen oder mehreren Zähnen zu befestigen.

14. Verfahren nach Anspruch 13, wobei die physische Bohrführung einen Schlitz (1002) beinhaltet, der einen Kopf (705a) von der einen oder mehreren Kofferdam-Klammern aufnimmt.

15. Verfahren nach Anspruch 13, wobei die physische Bohrführung (1000) eine Verlängerung (1003) beinhaltet, die in die Arme (704a) der einen oder mehrerer Kofferdam-Klammern (701) eingreift.

16. Verfahren nach Anspruch 1, wobei die physische Bohrführung (1000) ferner ein Verbindungsstück (2204) umfasst, das so konfiguriert ist, dass es an ein Absaugsystem angeschlossen werden kann, um während der Behandlung Flüssigkeit und Ablagerungen aus der Mundhöhle eines Patienten zu entfernen.

17. Verfahren nach Anspruch 1, das ferner einen Kanal (2201) umfasst, der im Körper des physischen Bohrers (1000) angeordnet und so konfiguriert ist, dass er Licht zum Beleuchten der Mundhöhle eines Patienten während der Behandlung aufnimmt.

18. Nicht-transitorisches computerlesbares Speichermedium, das ein Programm speichert, das, wenn es von einem System nach Anspruch 19 ausgeführt wird, das System (1) veranlasst, ein Verfahren nach einem der Verfahrensansprüche 1 bis 17 durchzuführen.

19. System (1) zum Erstellen einer virtuellen Bohrführung zum Herstellen einer physischen Bohrführung, wobei das System einen Prozessor umfasst, der so konfiguriert ist, dass er die Schritte nach einem der Ansprüche 1 bis 17 ausführt.

## Revendications

1. Procédé de création d'un guide de foret virtuel (900) destiné à fabriquer un guide de foret physique (1000), ledit procédé comprenant :
l'obtention d'une représentation numérique 3D (300) d'une ou plusieurs dents physiques (500) ;
l'obtention d'un emplacement d'un ou plusieurs canaux (600) dans la représentation numérique 3D (300) ;
la mise en place d'un crampon à digue dentaire virtuel (700) dans la représentation numérique 3D (300) sur la base d'un emplacement et d'une orientation souhaités d'un crampon à digue dentaire physique (701) correspondant ;
la mise en place d'une ou plusieurs fraises virtuelles (801) dans la représentation numérique 3D (300) sur la base de l'emplacement obtenu des un ou plusieurs canaux (600) ;
la création d'un guide de foret virtuel (900) sur la base (i) d'au moins une propriété des une ou plusieurs fraises virtuelles (801) mises en place, (ii) d'au moins une propriété du crampon à digue dentaire virtuel (700) et (iii) d'une anatomie d'une ou plusieurs dents virtuelles (400) ;
dans lequel le guide de foret virtuel (900) est conçu de telle sorte que le guide de foret physique (1000) à fabriquer correspond au guide de foret virtuel (900) ;
dans lequel le guide de foret physique (1000) inclut un ou plusieurs trous physiques (1101), chaque trou physique étant configuré pour recevoir une fraise physique à un angle et une position prédéterminés afin de (i) permettre la création d'une ouverture d'accès (1500) à un ou plusieurs canaux physiques (600) dans les une ou plusieurs dents physiques (500) et (ii) assurer le guidage dans l'établissement de la perméabilité du canal dans les une ou plusieurs dents physiques (500) ;
dans lequel les un ou plusieurs trous physiques (1001) sont basés sur l'emplacement des fraises virtuelles (801) mises en place, respectivement, du guide de foret virtuel (900) ;
la fabrication du guide de foret physique (1000) sur la base du guide de foret virtuel (900).

2. Procédé selon la revendication 1, comprenant en outre la mise en place d'inserts métalliques (1100) dans les un ou plusieurs trous physiques (1101) et la création d'une ouverture d'accès (1500) sur les une ou plusieurs dents physiques (500) en utilisant une fraise placée à l'intérieur de l'insert métallique du guide de foret physique (1000).

3. Procédé selon la revendication 2, comprenant en outre la mise en place d'un manchon pour lime à main (1601) dans l'insert métallique (1100) jusqu'à ce qu'un contact soit assuré avec une couronne des une ou plusieurs dents physiques (500) et l'établissement d'une perméabilité de canal dans les une ou plusieurs dents physiques (500) en utilisant une lime à main (1600).

4. Procédé selon la revendication 1, dans lequel les propriétés des une ou plusieurs fraises virtuelles (801) mises en place et la au moins une propriété du crampon à digue dentaire (700) sont sélectionnées parmi une ou plusieurs propriétés incluant la forme, la taille, l'orientation et la position.

5. Procédé selon la revendication 1, dans lequel une ou plusieurs dents virtuelles (400) sont segmentées à partir de la représentation numérique 3D (300) pour permettre une conception isolée du guide de foret virtuel (900).

6. Procédé selon la revendication 1, dans lequel les une ou plusieurs fraises virtuelles (801) sont mises en place en les faisant tourner et en les déplaçant de telle sorte qu'une extrémité coupante des une ou plusieurs fraises virtuelles soit placée au niveau d'un orifice de canal (800).

7. Procédé selon la revendication 1, dans lequel le guide de foret virtuel (900) est configuré pour être positionné sur une seule dent ou sur une pluralité de dents adjacentes.

8. Procédé selon la revendication 1, dans lequel le guide de foret virtuel (900) est conçu de manière automatique.

9. Procédé selon la revendication 1, dans lequel le guide de foret virtuel (900) est configuré en utilisant au moins une entrée provenant d'un utilisateur.

10. Procédé selon la revendication 1, dans lequel le guide de foret virtuel (900) inclut un canal (2201) destiné à recevoir une source de lumière (2202).

11. Procédé selon la revendication 1, dans lequel le guide de foret virtuel (900) inclut un raccord (2204) pour le raccordement à un système d'aspiration.

12. Procédé selon la revendication 1, dans lequel le guide de foret virtuel (900) est configuré pour accueillir une pluralité de crampons à digue dentaire virtuels (702).

13. Procédé selon la revendication 1, dans lequel le guide de foret physique (900) est dimensionné pour se mettre en prise avec une ou plusieurs parties des un ou plusieurs crampons à digue dentaire (700) afin de fixer le guide de foret physique sur les une ou plusieurs dents.

14. Procédé selon la revendication 13, dans lequel le guide de foret physique inclut une fente (1002) qui reçoit une tête (705a) des un ou plusieurs crampons à digue dentaire.

15. Procédé selon la revendication 13, dans lequel le guide de foret physique (1000) inclut une extension (1003) qui se met en prise avec les bras (704a) des un ou plusieurs crampons à digue dentaire (701).

16. Procédé selon la revendication 1, dans lequel le guide de foret physique (1000) comprend en outre un raccord (2204) configuré pour se raccorder à un système d'aspiration afin d'éliminer le liquide et les débris de la cavité buccale d'un patient pendant un traitement.

17. Procédé selon la revendication 1, comprenant en outre un canal (2201) disposé dans le corps du foret physique (1000) et configuré pour loger une lumière destinée à éclairer la cavité buccale d'un patient pendant un traitement.

18. Support de stockage non transitoire lisible par ordinateur stockant un programme qui, lorsqu'il est exécuté par un système selon la revendication 19, amène le système (1) à réaliser une procédure selon l'une quelconque des revendications de procédé 1 à 17.

19. Système (1) de création d'un guide de foret virtuel pour fabriquer un guide de foret physique, ledit système comprenant un processeur configuré pour exécuter les étapes selon l'une quelconque des revendications 1 à 17.
